# EUROPEAN PATENT SPECIFICATION

(11) **EP 1 923 289 B1**
(45) Date of publication and mention of the grant of the patent: **10.05.2017**
(21) Application number: 07120351.7
(22) Date of filing: 09.11.2007
(51) Int. Cl.: B60W 30/14, A01G 23/00, B60W 30/16, B60G 17/0195

(54) **A forest machine and dampening of vibration**
Waldmaschine und Vibrationsdämpfung
Machine de forêt et amortissement de vibrations

(30) Priority: 15.11.2006 FI 20065729
(43) Date of publication of application: 21.05.2008
(73) Proprietor: John Deere Forestry Oy, 33101 Tampere (FI)
(72) Inventor: Pesiö, Mauri, 33710, Tampere (FI)
(74) Representative: Berggren Oy, Tampere

(56) References cited:
- EP-A1- 1 582 445
- WO-A1-89/00928
- WO-A1-99/25574
- JP-A- 10 119 739
- JP-A- 2005 119 548
- JP-A- 2006 188 211
- US-A- 4 056 158
- US-A- 4 186 815
- US-A- 5 655 615
- US-A- 6 000 703
- US-A1- 2006 241 844

## Description

### FIELD OF INVENTION

The invention relates to a method in damping vibration of a forest machine, a control system for a forest machine, and a forest machine.

### BACKGROUND OF THE INVENTION

Forest machines are known to include various harvesters, forwarders, and their combinations. For performing harvesting, a harvesting device, *i.e.* a so-called harvester head, is fitted at the end of the crane system of the harvester for cutting, felling and delimbing a standing tree stem and sawing it to pieces of desired length. The sawn tree stems are collected with a forwarder equipped with a grapple fastened to a boom, and are transported away in its load space. Publication WO 02/036412 A1 discloses a load-carrying vehicle which is movable by means of wheels and comprises two frames connected to each other by means of a joint. The rear frame is equipped with a boom and a load space into which the tree stems are collected. The front frame is equipped with a cabin and a power source for the working machine.

Drivers of forest machines are subjected to vibration in their daily work. The Human Vibration Directive 2002/44/EC of the European Parliament and of the Council sets limit values and action values for daily exposure to vibration.

Exposure to vibration is defined on the basis of daily exposure, wherein an 8-hour reference value is examined. The daily exposure is assessed by using the greatest RMS (Root-Mean-Square) value or the greatest vibration dose value (VDV), in which different acceleration values are weighted depending on the frequency. The values are determined in three orthogonal directions x, y and z (forward, sideward and upward) by using weighting coefficients. The RMS value is expressed by means of acceleration, and the unit is m/s². The VDV value is expressed in the unit m/s^{1.75}, and it is more sensitive to vibration peaks. The directive sets for daily 8-hour exposure an action value (daily exposure action value) 1.15 m/s² or (VDV) 21 m/s^{1.75} and a limit value (daily exposure limit value) 0.5 m/s² or (VDV) 9.1 m/s^{1.75}. The limit value should not be exceeded.

Roughness of the terrain and the ground affects the driver of the forest machine by way of vibration. According to prior art, vibration has been damped by three different methods, which are passive damping, examples of which are springs and shock absorbers in the fastenings of the driver's seat or cabin; semiactive damping, examples of which are adjustable springs and shock absorbers; and active damping, an example of which is the providing of a suitable counterforce for the vibration by using a sensor, a controller, and an actuator.

The damping methods of prior art are deficient in that they do not eliminate the cause of the vibration but tend to dampen the vibration that occurs. For example, US-6000703-A shows an active suspension system for a cabin of a work vehicle which is controlled in response to a detected bumpiness of a surface ahead of the vehicle.

Vibration and vibration peaks can be reduced by decreasing the speed of the forest machine, but as a consequence, the work of the forest machine will slow down. In particular, a forwarder performs transportation of tree stems from a cutting area to a collection point several times during a day, so that using a lower speed will slow down the collection of the tree stems at the collection point. A low driving speed is not an attractive alternative, because it will affect directly the productivity of the work.

JP-2005-119548-A discloses a further relevant method for damping vibration in an electric vehicle which is driven on rough terrain, wherein the damping function of the suspension is shared by the control of an in-wheel drive motor. In this case the speed of the vehicle is maintained based on a signal from the accelerator, but the wheel driving speed is automatically reduced when the wheel of the vehicle is descending from the top of a protrusion of the ground as detected by at least a damper stroke sensor.

### SUMMARY OF THE INVENTION

The invention is based, among other things, on the observation that especially vibration peaks are a reason for exceeding the limit values set for vibration. Furthermore, it was noticed that particularly low-frequency (about 0.5 to 2 Hz) vibration in the side direction plays a large role in exceeding the limit value. Furthermore, it was found that in calculating the limit value of the directive, direction and frequency bound weighting coefficients are used which emphasize the effect of low-frequency vibration.

On the basis of the analysis, it was found that the vibration peaks are caused by the crossing of obstacles, particularly when a tyre of the forest machine falls or descends from the top of an obstacle back to the ground. On the basis of the analysis, it was also found that the magnitude of the vibration peaks is proportional to the driving speed of the forest machine when obstacles are being crossed. When driving at a high speed, the tyre of the forest machine loses its grip and holding earlier than when driving at a low speed; consequently, the tyre falls from the top of the obstacle onto the ground or down onto the bottom of a recess, resulting in swaying and vibration in the lateral direction. The vibration, to which the forest machine and the driver are subjected, is at its worst when a wheel on only one side of the forest machine is crossing the obstacle.

In the invention, it was found that vibration peaks are reduced particularly by decreasing the speed of the forest machine before the tyre falls from the top of the obstacle. Furthermore, in the invention, a system was developed that takes care of decreasing the speed automatically, wherein the control system of the forest machine takes care of changing the speed on the basis of, for example, signals given by sensors.

Furthermore, in the invention, a system was developed, by means of which it is possible to detect an obstacle or a location where the tyre is susceptible to falling. The speed of the forest machine can be decreased at the correct moment on the basis of a signal given by a sensor. Thanks to the system, the deceleration can be achieved precisely at the location where the lower speed is useful, wherein an unnecessary decrease in the speed can be avoided and the work is not slowed down in vain. In the invention, a system was used in which the profile of the ground is monitored already in advance to provide for altering the speed in good time. The profile data can be utilized for controlling all the wheels of the forest machine so that the speed of the forest machine is slowed down any time when any of the successively placed wheels is in turn for crossing an obstacle.

In one embodiment of the invention, the speed is selected to be proportional to the size of the obstacle to be crossed, wherein the higher the obstacle, the lower the speed.

In one embodiment of the invention, braking to a lower speed and accelerating to a higher speed are controlled by means of settable ramps, wherein the changes in the speed are more comfortable to the driver.

In a simple embodiment of the invention, the forest machine only comprises a system that monitors the profile of the ground and transmits data to the driver. For example, the system warns about obstacles that a wheel is approaching and that the obstacle is so large that it would be desirable to slow down.

A method according to the invention for damping vibration of a forest machine is presented in claim 1. A control system for a forest machine according to the invention is presented in claim 12. A forest machine according to the invention is presented in claim 18.

In addition to reducing vibration, the invention provides other advantages as well. In practice, it would be impossible for the driver to follow the precise mutual position of the wheels and the obstacle so as to decrease the speed at the correct moment. Instead, the driver would decrease the speed unnecessarily, which would slow down the transportation of tree stems, particularly in the case of a forwarder. Furthermore, the driver would follow the obstacles and not sufficiently the other behaviour of the forwarder or the driving route, which would make the transportation times even longer. The driver's visual range is obstructed by dead regions caused by the cabin, the chassis and the wheels, wherein the obstacles are not necessarily even visible. Furthermore, even if the obstacle was visible, it would be difficult to determine its height from above, based on a visual perception from the cabin. It would be difficult for the driver to select the speed, at which the vibration can be prevented in the most efficient way for each obstacle. It is an advantage of the automatic and optimal operation of the control system that the driver may concentrate on other things than on the variation in the driving speed and on the obstacles, and driving is more comfortable and faster.

The invention can be applied in various forest machines but particularly in forest machines used for transporting tree stems, because they often perform pick-ups and transfers to the work site during a working day.

### BRIEF DESCRIPTION OF THE DRAWINGS

In the following, the invention will be described in more detail by means of examples and with reference to the appended drawings, in which
Fig. 1 shows a forwarder in which the invention is applied,
Fig. 2 shows the drive transmission of a forest machine and the principle of a control system,
Fig. 3 shows a wheel of a forest machine and an obstacle,
Fig. 4 illustrates the operation of a sensor,
Figs. 5a, 5b, 6a, and 6b represent vibration measurements,
Fig. 7 illustrates the principle of a simple embodiment of the invention, and
Fig. 8 shows another embodiment of the invention.

### MORE DETAILED DESCRIPTION OF THE INVENTION

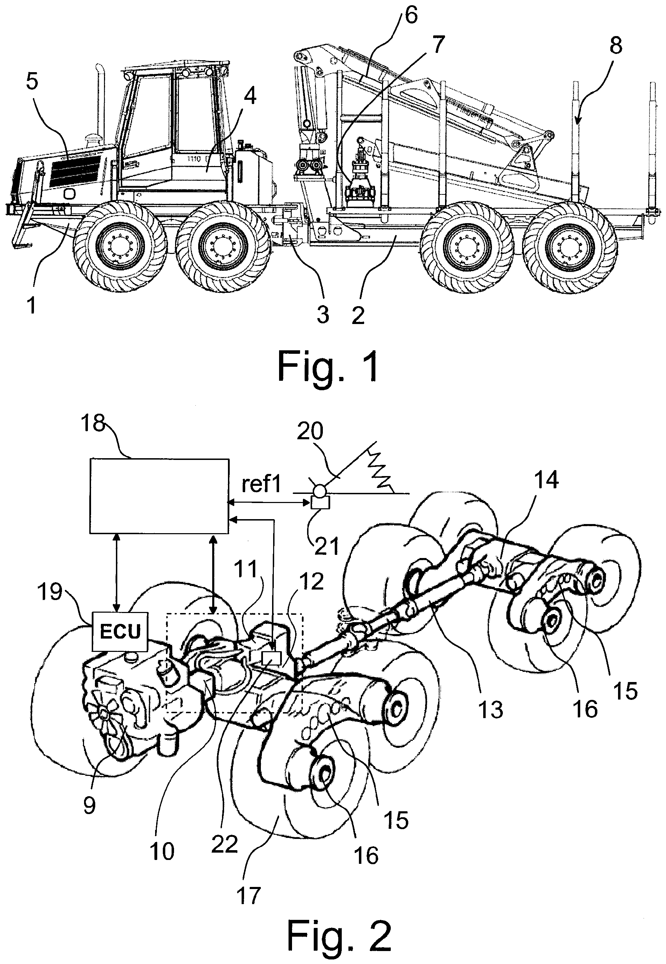

Figure 1 shows a forwarder of prior art, in which the invention is applied. The forwarder comprises a front frame 1 and a rear frame 2 which are interconnected by means of a frame joint 3. The front frame 1 comprises a cabin 4 and a power source 5, and the rear frame 2 comprises a boom 6 with a grapple 7 and a load space 8. Each frame comprises a two-wheeled rocking shaft, but in the front frame, a possible alternative is to use a normal single-wheel shaft with a large wheel.

As shown in Fig. 2, hydrostatic drive transmission is normally applied in forest machines, and this is also applied in the forwarder of Fig. 1. The drive transmission converts the mechanical power supplied by a diesel engine 9 to hydraulic power in a pump 10, wherein the power is proportional to the feed pressure and volume flow in the pump 10. The pump 10 is adjustable, wherein the volume flow can be changed. The hydraulic power is utilized in an engine 11 which, in turn, generates a torque and a rotating speed for an output shaft. The rotation speed of the engine 11 depends on the volume flow and on the setting of the engine 11. The engine 11, in turn, is coupled to a gear 12 (fast/slow), by means of which the mechanical power is transferred to the wheels 17 of the working machine, for example by means of cardan transmission 13 and differential shafts 14 to two-wheeled rocking shafts or bogies 15 equipped with the wheels 17 of the working machine which are mounted on pivotable hubs 16. A balanced planetary transmission is typically provided inside the bogie. The driving speed is typically controlled in a stepless manner. To increase the speed, the volume flow produced by the pump 10 is increased.

It is known that a control system is used for controlling forest machines. In the forest machine, the control system controls, among other things, the diesel engine, the hydrostatic drive transmission, and the crane system, to which the harvester head or grapple is coupled, as well as all the auxiliary functions related to these. Said control system is used, for example, in the operating environment of a PC computer of prior art.

The hydrostatic drive transmission is controlled by an electronic control system 18 of the working machine which also controls the diesel engine 9 by means of an electronic control unit (ECU) 19. The control bus of the control system typically applies a CAN bus, and the control system 18 typically consists of independent smart modules whose operation is controlled by means of control panels and other equipment (central processing unit, display, keyboard, *etc.*) placed within the reach of the driver. The control system is also connected to a sensor 22 which gives a signal that is proportional to the distance travelled by the wheel 17. The operation of the sensor 22 is based, for example, on monitoring the rotation of the hub 16, but with respect to the sensor, it is also possible to apply other principles known as such. The sensor 22, which is for example a pulse sensor, is typically placed in the engine 11.

The rotational speed of the diesel engine 9 and the driving speed are determined by a control value (ref1) given by the driver, typically by using a pedal 20. By means of a sensor 21, the pedal provides the control system with a signal that is dependent on the position of the pedal 20. The control value can also be given in other ways, for example by using a manual control stick. The position of the pedal 20 controls the volume flow produced by the pump 10. The dependence between the rotational speed or the driving speed and the control value is typically linear. The driving speed is also influenced by the use of a so-called reducing gear. According to prior art, the reducing gear is a mode of the control system that can be selected by the operator and to which is related either a fixed or settable parameter of the control system, representing the control value.

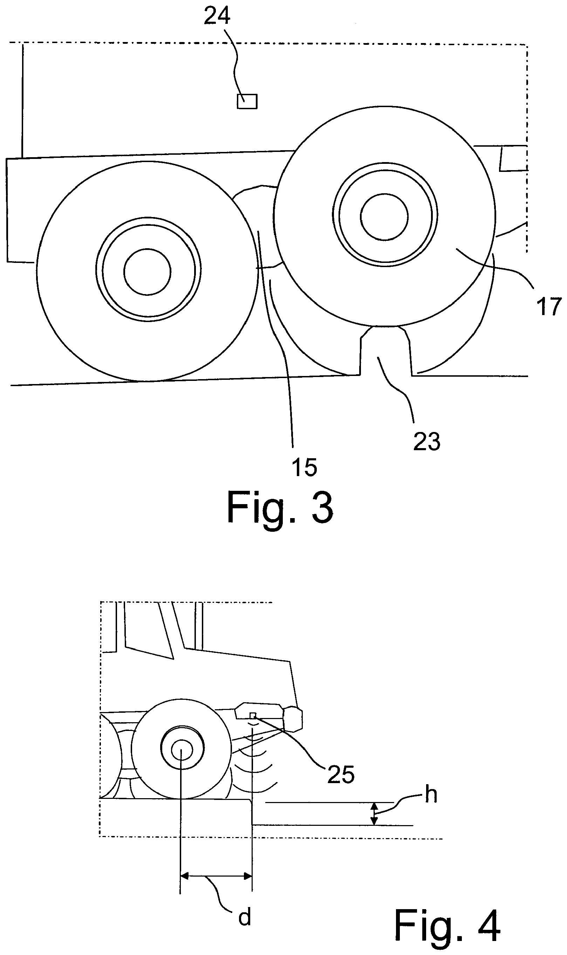

Figure 3 illustrates the principle, by which the bogie 15 of a forest machine crosses a single obstacle 23, wherein the front wheel 16 ascends on top of the obstacle 23 and further descends, typically by falling, to the other side of the obstacle 23, causing a sway and vibration.

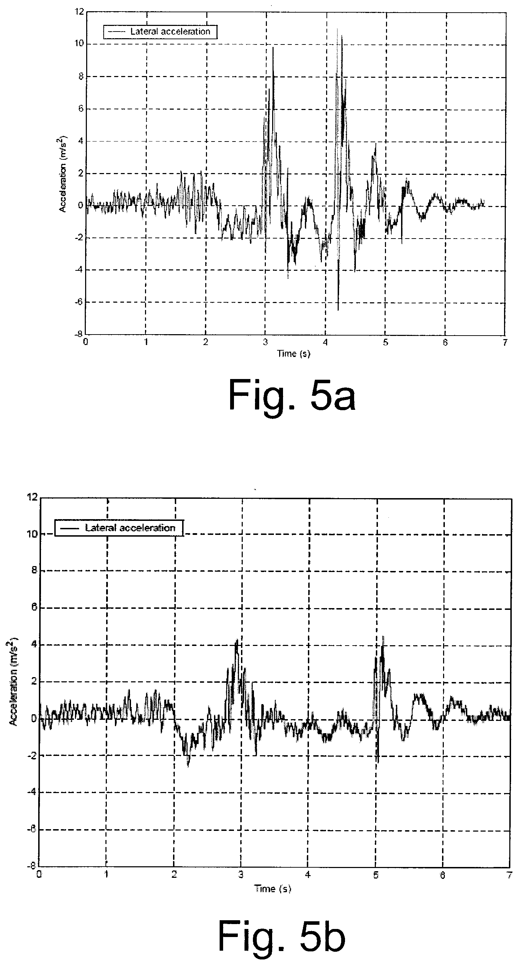

Figure 5a shows an example illustrating the vibration to which the driver is subjected in the transverse direction (y-direction, lateral acceleration), wherein the horizontal axis represents time in seconds and the vertical axis represents the measured acceleration (m/s²). It is the case of a single obstacle shown in Fig. 3, crossed by the wheels each in turn. The acceleration has been measured with an acceleration sensor 24 placed centrally at the driver's seat in the cabin, as shown in Fig. 3. From Fig. 5a, two vibration peaks are clearly detectable, which are caused by the falling of the front wheel and the rear wheel from the top of the obstacle.

Preventing the occurrence of vibration peaks is an effective way of preventing uncomfortable vibration, to which the driver is subjected, and thereby of preventing that the limit values set for vibration are exceeded. Figure 5b shows a situation in which the speed of the forest machine is slowed down when the wheel is on top of the obstacle and is moving forward from the top of the obstacle. It can be seen that the vibraton peaks have become considerably lower. The latter vibration peak occurs later because of the lowered speed. It is a feature of hydrostatic drive transmission that the system is unyielding, wherein the set driving speed is maintained and each traction wheel brakes efficiently the movement of the working machine, wherein it does not tend to move faster than the set driving speed, for example when descending from the top of an obstacle. In the measurements, it was also found that the ascending of the wheel onto the obstacle did not cause such vibration as the falling of the wheel did. Consequently, in most cases it is sufficient that the limit values set for vibration can be observed by controlling the descending of the wheel from the top of the obstacle.

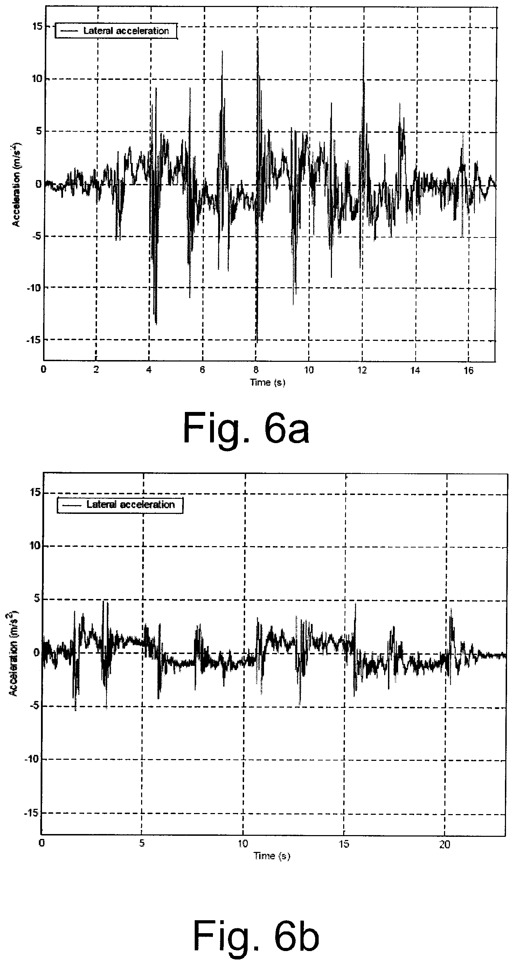

Figure 6a shows a situation in which there are several obstacles and the wheels are crossing them all the time. From Fig. 6a, several vibration peaks are clearly detectable, which are caused by the falling of the wheels from the top of the obstacles. Even in this case, uncomfortable vibration and exceeding of the limit values are prevented by preventing the occurrence of vibration peaks. Figure 6b shows a situation in which the speed of the forest machine is decreased each time when a wheel is on top of an obstacle and is moving forward, away from the top of the obstacle. It can be seen that the vibraton peaks have become considerably lower. The driving speed remains low all the time, because the obstacles follow densely each other.

A requirement for the reduction of the speed is that the obstacle is detected in advance and also that the arrival of the wheel at the obstacle can be estimated with sufficient accuracy. According to Fig. 4, the obstacle is detected by using a sensor 25 fixed to the front frame of the forest machine for measuring the distance of the sensor 25 from the ground. The sensor 25 can be, for example, an ultrasound sensor whose operation is based on an audio pulse transmitted by the sensor and on an echo received by the sensor. The distance of the object to be monitored, that is, the distance between the ground or the obstacle and the sensor, is determined on the basis of the length of the time span between the audio pulse and its echo. By means of the sensor 25, information is received about the profile of the ground surface at the location which will be passed by the wheels of the forest machine a moment later. If the distance is abruptly increased, it is possible to determine the height h of the obstacle from the measurement and, depending on the accuracy of the measurement, also the more detailed profile. The faster and the shorter the range in which the distance h increases, the steeper the fall. The obstacle to be crossed may be either an obstacle protruding from the gorund and being higher than the ground, so that the wheel must first ascend on top of it, as shown in Fig. 3, or a recess that is lower than the ground and to which the wheel descends, as shown in Fig. 4, for example a pit. Typical obstacles include fallen tree stems, tussocks, and tree roots or stumps. In an example, the control system examines if the shift is sufficiently small (a low obstacle or recess) or flat, and does not lower the speed, or only lowers the speed to a limited extent. For the examining, it is possible to use a limit value that is a settable parameter and is stored in the control system. For the sensor, also other alternatives may be feasible that measure the distance of the ground or obstacle from the fastening point of the sensor, for example radars or scanning devices, including laser. The system normally comprises two sensors fastened on each side of the front frame, placed on the front side of the wheels. The location may be, for example, a bumper or a running board.

The movement of the sensor up and down with the forest machine can be compensated for in the measurement, and typically an increase in the measured distance indicates a point at which a wheel falls from the top of an obstacle. The faster and the shorter the range in which the distance increases, the steeper the fall. The measurement result of the sensor can also be interpreted in more detail, supplemented or confirmed, for example, with an angle sensor determining the position of the bogie. The angle sensor can be used to define if the wheel is on a flat surface or is ascending/descending.

The location of the obstacle and the position of each wheel in relation to each other can be determined accurately when the distances d between the sensor 25 and each wheel are known. The distance travelled by the forest machine is determined by means of the sensor 22, wherein it remains a function of the control system to follow the travelled path and to time a deceleration at the obstacle, when the forest machine has travelled, for example, the distance d. The control system may also estimate the position and the path of the wheel on the basis of the data on the speed of the forest machine, obtained e.g. from the control bus. By integrating the speed data or on the basis of the time passed, it is possible to estimate the location of the wheel.

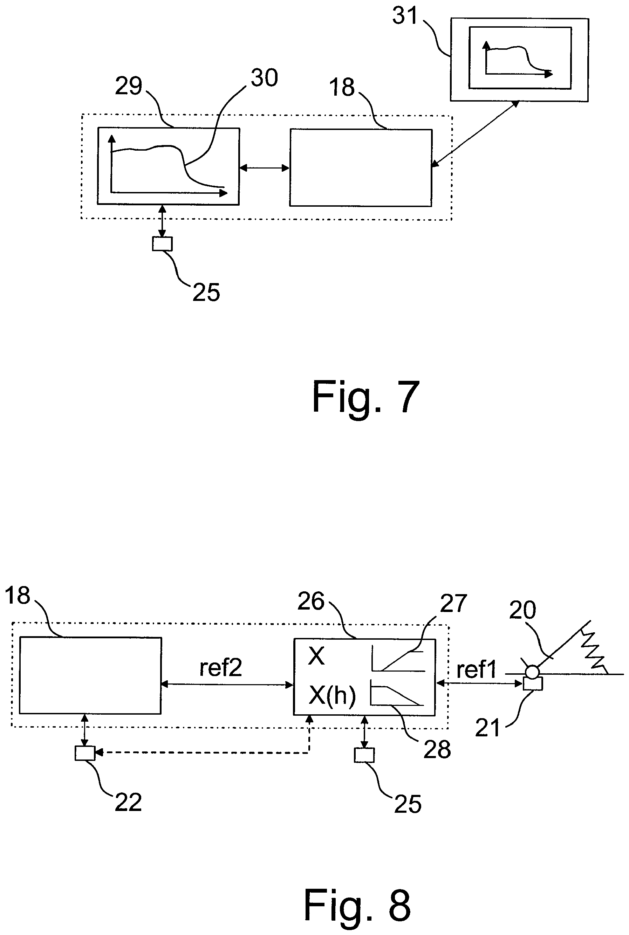

As shown in Fig. 8, the control system 18 can be supplemented with a separate control module 26 which can, alternatively, also be integrated in the control system 18 as desired. In the presented embodiment, the control module 26 modifies (e.g. coefficient X) the control value ref1 given by the driver, if an obstacle is detected. The control value ref1 represents the desired driving speed. In an embodiment, the change in the control value (control value ref2) is dependent on the height of the obstacle (e.g. coefficient X(h)), wherein high obstacles are crossed more slowly. The control module 26 is connected to the sensor 25 and, if necessary, also to the sensor 22, if the control algorithm stored in the control module 26 also follows the travelled path and times the change in the control value (control value ref2) at the moment when a wheel is at the obstacle. The control module 26 takes care that one or more successive wheels slow down at the obstacle. Alternatively, said functions of the control module 26 are included in a desired way in the control system 18 which, on the basis of data from the sensor 25, selects either the control value ref1 (normal situation, X = 1) or the control value ref2, when the wheel is at an obstacle. The control system 18 controls, for example by means of the control value, the drive transmission which typically comprises a control module of its own.

The behaviour of the forest machine is also influenced by the rate at which the driving speed of the forest machine is slowed down to the speed at which the wheel moves away from the top of the obstacle, and the rate at which it is accelerated back to the normal driving speed. The normal driving speed for a forwarder is, for example, in the order of 4 km/h, and the decelerated speed at an obstacle, when the wheel moves away from the top of an obstacle, is, for example, in the order of 1.5 km/h. The control module 26 or the control system 18 comprises a settable ramp 27 for acceleration and a settable ramp 28 for braking. The settability is implemented by means of either fixed or variable parameters.

In a simple embodiment of the invention, the system only comprises, as shown in Fig. 7, a sensor 25 and a control module 29 for detecting the profile 30 of the ground. The functions of the control module 29 can also be integrated to a desired extent in the control system 18, which presents data about the profile to the driver of the forest machine, for example, by means of a display 31. For the display, for example a graphic curve and/or numerical data are used. The functions include, for example, a warning about an obstacle that is larger than a set limit or about a recess that is deeper than a set limit. The warning is, for example, a light signal or a flashing icon on the display. The functions may also include an acoustic signal that indicates the moment when one of the wheels is on top of an obstacle that requires reducing the driving speed. The acoustic signal is timed to be heard at the obstacle, wherein it simultaneously instructs the driver what to do. If necessary, the functions utilize the sensor 22. On the basis of the acoustic signal, the driver may drive more slowly and the driver does not need to monitor the wheels or estimate the obstacles himself/herself.

In applying the invention, software applications, components and parts of already existing control systems are used which are known as such and which are modified in a way required by the invention. However, the modification work and the application are obvious for a person skilled in the art on the basis of the above description. Furthermore, the invention is not restricted solely to the embodiments presented above.

## Claims

1. A method in damping vibration in a forest machine, the method comprising:
- maintaining a desired driving speed,
the method being **characterised by**:
- monitoring in advance the profile of the ground on the travel path of a wheel (17) of the forest machine by means of a sensor (25) coupled to the forest machine to provide for altering the speed, and
- maintaining automatically a reduced driving speed when the wheel of the forest machine is descending from the top of an obstacle (23) protruding from the ground or into a recess in the ground.

2. The method according to claim 1, comprising:
- determining automatically the height of said obstacle or the depth of said recess, and
- performing the determination before said wheel reaches said obstacle or recess.

3. The method according to claim 2, wherein the reduced driving speed is proportional to the height of the obstacle or the depth of the recess.

4. The method according to claim 2 or 3, wherein the reduced driving speed is proportional to the steepness of the obstacle or the steepness of the recess.

5. The method according to any of the claims 1 to 4, comprising:
- performing a shift to the reduced driving speed under the control of a defined deceleration ramp (28), and
- performing a shift back to the desired driving speed under the control of a defined acceleration ramp (27).

6. The method according to any of the claims 1 to 5, comprising
- steering a two-wheeled rocking bogie (15) of the forest machine across an obstacle (23), and
- maintaining the reduced driving speed when the front wheel and the rear wheel of the bogie are descending from the top of the obstacle protruding from the ground or into a recess in the ground.

7. The method according to any of the claims 1 to 5, comprising:
- steering a two-wheeled rocking rear bogie (15) of the forest machine across an obstacle (23), and
- maintaining the reduced driving speed when the front wheel and the rear wheel of the rear bogie are descending from the top of the obstacle protruding from the ground or into a recess in the ground.

8. The method according to any of the claims 1 to 4, comprising:
- detecting automatically the presence of said obstacle or recess,
- determining the distance between the wheel of the forest machine and said obstacle or recess, and
- timing the implementation of the reduced driving speed for the moment when said wheel starts to descend.

9. The method according to claim 2 or 8, comprising:
- detecting said obstacle or recess by means of the sensor fastened to the forest machine and detecting the profile (30) of the ground on the path of the wheel.

10. The method according to any of the claims 1 to 7, comprising:
- maintaining the desired driving speed and the reduced driving speed by the hydrostatic drive transmission of the forest machine that is controlled automatically.

11. The method according to any of the claims 1 to 9, comprising:
- selecting automatically the desired driving speed in proportion to a control value (ref1) given by the driver,
- replacing automatically said control value with a new control value corresponding to the reduced driving speed, and
- entering said new control value (ref2) in the control system (18) which controls the driving speed of the forest machine.

12. A control system for a forest machine, comprising:
- a control system (18) arranged to maintain a desired driving speed of the forest machine, and
- a sensor (25) fastened to the forest machine and coupled to the control system,
- wherein the sensor is arranged to monitor in advance the profile of the ground on the travel path of a wheel (17) of the forest machine,
the control system being **characterised by**:
- wherein the control system is further arranged to maintain automatically a reduced driving speed at a location where the wheel of the forest machine is descending from the top of an obstacle protruding from the ground or into a recess in the ground.

13. The control system according to claim 12, further comprising:
- a first coupling to the sensor (25) arranged to detect the profile of the ground on the travel path of the wheel of the forest machine, and
- a second coupling to a second sensor (22) arranged to determine the path travelled by the wheel of the forest machine.

14. The control system according to claim 12 or 13, further comprising:
- a first input which is a control value (ref1) proportional to the desired driving speed.

15. The control system according to claim 14, further comprising:
- a control module (26) arranged to replace said control value automatically with a new control value (ref2) that corresponds to a reduced driving speed.

16. The control system according to any of the claims 12 to 15, wherein the reduced driving speed is proportional to the height of the obstacle or the depth of the recess.

17. The control system according to any of the claims 12 to 16, wherein the control system is also arranged to determine the arrival of the wheel at a location where said obstacle or recess is.

18. A forest machine, comprising:
- a drive transmission having several wheels (17) for travelling,
- a control system (18) arranged to maintain a desired driving speed of the forest machine and to control the drive transmission, and
- a sensor (25) fastened to the forest machine and coupled to the control system,
- wherein the sensor is arranged to monitor in advance the profile of the ground on the travel path of a wheel (17) of the forest machine,
the forest machine being **characterised by**:
- wherein the control system is further arranged to maintain a reduced driving speed automatically at a location where the wheel of the forest machine is descending from the top of an obstacle protruding from the ground or into a recess in the ground.

19. The forest machine according to claim 18, further comprising:
- a second sensor (22) coupled to the control system and arranged to determine the path travelled by the wheel of the forest machine, and
- an input which is a control value (ref1) proportional to the desired driving speed.

20. The forest machine according to claim 18 or 19, wherein said drive transmission is hydrostatic and comprises two or more two-wheeled rocking shafts or bogies (15).

21. The forest machine according to any of the claims 18 to 20, wherein the forest machine is a forest machine for transporting tree stems.

## Patentansprüche

1. Ein Verfahren zur Vibrationsdämpfung in einer Waldmaschine, wobei das Verfahren Folgendes umfasst:
- Beibehalten einer gewünschten Fahrgeschwindigkeit,
wobei das Verfahren durch Folgendes **gekennzeichnet** ist:
- vorab Überwachen des Bodenprofils auf dem Fahrweg eines Rades (17) der Waldmaschine mittels eines Sensors (25), der mit der Waldmaschine gekoppelt ist, um für ein Ändern der Geschwindigkeit zu sorgen, und
- automatisches Beibehalten einer reduzierten Fahrgeschwindigkeit, wenn das Rad der Waldmaschine von oben herab von einem aus dem Boden hervorstehenden Hindernis (23) oder in eine Vertiefung im Boden hinunterfährt.

2. Verfahren gemäß Anspruch 1, welches Folgendes umfasst:
- automatisches Feststellen der Höhe des Hindernisses oder der Tiefe der Vertiefung, und
- Durchführen des Feststellens, bevor das Rad das Hindernis oder die Vertiefung erreicht.

3. Verfahren gemäß Anspruch 2, wobei die reduzierte Fahrgeschwindigkeit proportional zur Höhe des Hindernisses oder zur Tiefe der Vertiefung ist.

4. Verfahren gemäß Anspruch 2 oder 3, wobei die reduzierte Fahrgeschwindigkeit proportional zur Steilheit des Hindernisses oder zur Steilheit der Vertiefung ist.

5. Verfahren gemäß einem der Ansprüche 1 bis 4, welches Folgendes umfasst:
- Ausführen einer Umschaltung in die reduzierte Fahrgeschwindigkeit unter der Kontrolle einer definierten Verzögerungsrampe (28), und
- Ausführen einer Rückschaltung in die gewünschte Fahrgeschwindigkeit unter der Kontrolle einer definierten Beschleunigungsrampe (27).

6. Verfahren gemäß einem der Ansprüche 1 bis 5, welches Folgendes umfasst:
- Steuern eines zweirädrigen Schwingfahrgestells (15) der Waldmaschine über ein Hindernis (23), und
- Beibehalten der reduzierten Fahrgeschwindigkeit, wenn das Vorderrad und das Hinterrad des Fahrgestells von oben herab von einem aus dem Boden hervorstehenden Hindernis oder in eine Vertiefung im Boden hinunterfahren.

7. Verfahren gemäß einem der Ansprüche 1 bis 5, welches Folgendes umfasst:
- Steuern eines zweirädrigen hinteren Schwingfahrgestells (15) der Waldmaschine über ein Hindernis (23), und
- Beibehalten der reduzierten Fahrgeschwindigkeit, wenn das Vorderrad und das Hinterrad des hinteren Fahrgestells von oben herab von einem aus dem Boden hervorstehenden Hindernis oder in eine Vertiefung im Boden hinunterfahren.

8. Verfahren gemäß einem der Ansprüche 1 bis 4, welches Folgendes umfasst:
- automatisches Feststellen des Vorhandenseins eines Hindernisses oder einer Vertiefung,
- Bestimmen des Abstands zwischen dem Rad der Waldmaschine und dem Hindernis oder der Vertiefung, und
- zeitliches Festlegen der Umsetzung der reduzierten Fahrgeschwindigkeit für den Moment, wenn das Rad anfängt, herunterzufahren.

9. Verfahren gemäß Anspruch 2 oder 8, welches Folgendes umfasst:
- Feststellen des Hindernisses oder der Vertiefung mittels des Sensors, der an der Waldmaschine befestigt ist, und Bestimmen des Profils (30) des Bodens auf dem Fahrweg des Rads.

10. Verfahren gemäß einem der Ansprüche 1 bis 7, welches Folgendes umfasst:
- Beibehalten der gewünschten Fahrgeschwindigkeit und der reduzierten Fahrgeschwindigkeit mittels der hydrostatischen Antriebsübertragung der Waldmaschine, die automatisch gesteuert wird.

11. Verfahren gemäß einem der Ansprüche 1 bis 9, welches Folgendes umfasst:
- automatisches Wählen der gewünschten Fahrgeschwindigkeit im Verhältnis zu einem Steuerwert (ref1), der von dem Fahrer vorgegeben wird,
- automatisches Ersetzen des Steuerwerts durch einen neuen Steuerwert, der der reduzierten Fahrgeschwindigkeit entspricht, und
- Eingeben des neuen Steuerwerts (ref2) in das Steuersystem (18), das die Fahrgeschwindigkeit der Waldmaschine steuert.

12. Ein Steuersystem für eine Waldmaschine, welches Folgendes aufweist:
- ein Steuersystem (18), das angeordnet ist, um eine gewünschte Fahrgeschwindigkeit der Waldmaschine beizubehalten, und
- einen Sensor (25), der an der Waldmaschine befestigt und mit dem Steuersystem gekoppelt ist,
- wobei der Sensor angeordnet ist, um vorab das Bodenprofil auf dem Fahrweg eines Rades (17) der Waldmaschine zu überwachen,
wobei das Steuersystem **durch** Folgendes **gekennzeichnet** ist:
- wobei das Steuersystem darüber hinaus angeordnet ist, um eine reduzierte Fahrgeschwindigkeit automatisch an einer Stelle beizubehalten, an der das Rad der Waldmaschine von oben herab von einem aus dem Boden hervorstehenden Hindernis oder in eine Vertiefung im Boden hinunterfährt.

13. Steuersystem gemäß Anspruch 12, welches Folgendes umfasst:
- eine erste Kopplung mit dem Sensor (25), der angeordnet ist, um das Bodenprofil auf dem Fahrweg des Rades der Waldmaschine zu ermitteln, und
- eine zweite Kopplung mit einem zweiten Sensor (22), der angeordnet ist, um die vom Rad der Waldmaschine zurückgelegte Strecke zu bestimmen.

14. Steuersystem gemäß Anspruch 12 oder 13, welches Folgendes umfasst:
- eine erste Eingabe, die einen Steuerwert (ref1) proportional zur gewünschten Fahrgeschwindigkeit darstellt.

15. Steuersystem gemäß Anspruch 14, welches weiterhin Folgendes aufweist:
- ein Steuermodul (26), das angeordnet ist, um den Steuerwert automatisch durch einen neuen Steuerwert (ref2), der einer reduzierten Fahrgeschwindigkeit entspricht, zu ersetzen.

16. Steuersystem gemäß einem der Ansprüche 12 bis 15, wobei die reduzierte Fahrgeschwindigkeit proportional zur Höhe des Hindernisses oder zur Tiefe der Vertiefung ist.

17. Steuersystem gemäß einem der Ansprüche 12 bis 16, wobei das Steuersystem auch angeordnet ist, um das Ankommen des Rads an einer Stelle, an der sich das Hindernis oder die Vertiefung befindet, festzustellen.

18. Eine Waldmaschine, welche Folgendes aufweist:
- eine Antriebsübertragung mit mehreren Rädern (17) zum Fahren,
- ein Steuersystem (18), das angeordnet ist, um eine gewünschte Fahrgeschwindigkeit der Waldmaschine beizubehalten und die Antriebsübertragung zu steuern, und
- einen Sensor (25), der an der Waldmaschine befestigt und mit dem Steuersystem gekoppelt ist,
- wobei der Sensor angeordnet ist, vorab das Bodenprofil auf dem Fahrweg eines Rades (17) der Waldmaschine zu überwachen,
wobei die Waldmaschine **durch** Folgendes **gekennzeichnet** ist:
- wobei das Steuersystem darüber hinaus angeordnet ist, um eine reduzierte Fahrgeschwindigkeit automatisch an einer Stelle beizubehalten, an der das Rad der Waldmaschine von oben herab von einem aus dem Boden hervorstehenden Hindernis oder in eine Vertiefung im Boden hinunterfährt.

19. Waldmaschine gemäß Anspruch 18, welche darüber hinaus Folgendes aufweist:
- einen zweiten Sensor (22), der mit dem Steuersystem gekoppelt und angeordnet ist, um die von dem Rad der Waldmaschine zurückgelegte Strecke zu bestimmen, und
- eine Eingabe, welche einen Steuerwert (ref1) proportional zur gewünschten Fahrgeschwindigkeit darstellt.

20. Waldmaschine gemäß Anspruch 18 oder 19, wobei die Antriebsübertragung hydrostatisch ist und zwei oder mehr zweirädrige Schwingwellen oder Fahrgestelle aufweist.

21. Waldmaschine gemäß einem der Ansprüche 18 bis 20, wobei die Waldmaschine eine Waldmaschine zum Transportieren von Baumstämmen ist.

## Revendications

1. Procédé d'amortissement de vibrations dans une machine forestière, le procédé comprenant les étapes consistant à :
- conserver une vitesse de conduite souhaitée,
le procédé étant **caractérisé par** les étapes consistant à :
- surveiller à l'avance le profil du sol sur le trajet de déplacement d'une roue (17) de la machine forestière au moyen d'un capteur (25) couplé à la machine forestière afin de fournir une modification de la vitesse, et
- conserver de manière automatique une vitesse de conduite réduite lorsque la roue de machine forestière est en train de descendre du dessus d'un obstacle (23) faisant saillie à partir du sol ou de descendre dans un renfoncement du sol.

2. Procédé selon la revendication 1, comprenant les étapes consistant à :
- déterminer de manière automatique la hauteur dudit obstacle ou la profondeur dudit renfoncement, et
- mettre en oeuvre la détermination avant que ladite roue atteigne ledit obstacle ou ledit renfoncement.

3. Procédé selon la revendication 2, dans lequel la vitesse de conduite réduite est proportionnelle à la hauteur de l'obstacle ou à la profondeur du renfoncement.

4. Procédé selon la revendication 2 ou 3, dans lequel la vitesse de conduite réduite est proportionnelle à l'escarpement de l'obstacle ou à l'escarpement du renfoncement.

5. Procédé selon l'une quelconque des revendications 1 à 4, comprenant les étapes consistant à :
- mettre en oeuvre un décalage de la vitesse de conduite réduite sous la commande d'une rampe de décélération (28) définie, et
- mettre en oeuvre un décalage pour revenir à la vitesse de conduite souhaitée sous la commande d'une rampe d'accélération (27) définie.

6. Procédé selon l'une quelconque des revendications 1 à 5, comprenant les étapes consistant à :
- diriger un bogie oscillant à deux roues (15) de la machine forestière pour franchir un obstacle (23), et
- conserver la vitesse de conduite réduite lorsque la roue avant et la roue arrière du bogie sont en train de descendre du dessus de l'obstacle faisant saillie à partir du sol ou de descendre dans un renfoncement du sol.

7. Procédé selon l'une quelconque des revendications 1 à 5, comprenant les étapes consistant à :
- diriger un bogie arrière oscillant à deux roues (15) de la machine forestière pour franchir un obstacle (23), et
- conserver la vitesse de conduite réduite lorsque la roue avant et la roue arrière du bogie arrière sont en train de descendre du dessus de l'obstacle faisant saillie à partir du sol ou de descendre dans un renfoncement du sol.

8. Procédé selon l'une quelconque des revendications 1 à 4, comprenant les étapes consistant à :
- détecter de manière automatique la présence dudit obstacle ou dudit renfoncement,
- déterminer la distance entre la roue de la machine forestière et ledit obstacle ou ledit renfoncement, et
- synchroniser la mise en oeuvre de la vitesse de conduite réduite avec le moment où ladite roue commence à descendre.

9. Procédé selon la revendication 2 ou 8, comprenant les étapes consistant à :
- détecter ledit obstacle ou ledit renfoncement au moyen du capteur fixé à la machine forestière et détecter le profil (30) du sol sur le trajet de la roue.

10. Procédé selon l'une quelconque des revendications 1 à 7, comprenant l'étape consistant à :
- conserver la vitesse de conduite souhaitée et la vitesse de conduite réduite grâce à la transmission hydrostatique de la machine forestière qui est commandée de manière automatique.

11. Procédé selon l'une quelconque des revendications 1 à 9, comprenant les étapes consistant à :
- sélectionner de manière automatique la vitesse de conduite souhaitée en proportion d'une valeur de commande (ref1) fournie par le conducteur,
- remplacer de manière automatique ladite valeur de commande par une nouvelle valeur de commande correspondant à la vitesse de conduite réduite, et
- entrer ladite nouvelle valeur de commande (ref2) dans le système de commande (18) qui commande la vitesse de conduite de la machine forestière.

12. Système de commande pour une machine forestière, comprenant :
- un système de commande (18) conçu pour conserver une vitesse de conduite souhaitée de la machine forestière, et
- un capteur (25) fixé à la machine forestière et couplé au système de commande,
- dans lequel le capteur est conçu pour surveiller à l'avance le profil du sol sur le trajet de déplacement d'une roue (17) de la machine forestière,
le système de commande étant **caractérisé en ce que** :
- le système de commande est en outre conçu pour conserver de manière automatique une vitesse de conduite réduite au niveau d'un emplacement où la roue de la machine forestière est en train de descendre du dessus d'un obstacle faisant saillie à partir du sol ou de descendre dans un renfoncement du sol.

13. Système de commande selon la revendication 12, comprenant en outre :
- un premier couplage au capteur (25) conçu pour détecter le profil du sol sur le trajet de déplacement de la roue de la machine forestière, et
- un deuxième couplage à un deuxième capteur (22) conçu pour déterminer le trajet parcouru par la roue de la machine forestière.

14. Système de commande selon la revendication 12 ou 13, comprenant en outre :
- une première entrée qui est une valeur de commande (ref1) proportionnelle à la vitesse de conduite souhaitée.

15. Système de commande selon la revendication 14, comprenant en outre :
- un module de commande (26) conçu pour remplacer ladite valeur de commande de manière automatique par une nouvelle valeur de commande (ref2) qui correspond à une vitesse de conduite réduite.

16. Système de commande selon l'une quelconque des revendications 12 à 15, dans lequel la vitesse de conduite réduite est proportionnelle à la hauteur de l'obstacle ou à la profondeur du renfoncement.

17. Système de commande selon l'une quelconque des revendications 12 à 16, dans lequel le système de commande est également conçu pour déterminer l'arrivée de la roue au niveau d'un emplacement où se trouve ledit obstacle ou ledit renfoncement.

18. Machine forestière, comprenant :
- une transmission présentant plusieurs roues (17) permettant un déplacement,
- un système de commande (18) conçu pour conserver une vitesse de conduite souhaitée de la machine forestière et pour commander la transmission, et
- un capteur (25) fixé à la machine forestière et couplé au système de commande,
- dans lequel le capteur est conçu pour surveiller à l'avance le profil du sol sur le trajet de déplacement d'une roue (17) de la machine forestière,
la machine forestière étant **caractérisée en ce que** :
- le système de commande est en outre conçu pour conserver une vitesse de conduite réduite de manière automatique au niveau d'un emplacement où la roue de la machine forestière est en train descendre du dessus d'un obstacle faisant saillie à partir du sol ou de descendre dans un renfoncement du sol.

19. Machine forestière selon la revendication 18, comprenant en outre :
- un deuxième capteur (22) couplé au système de commande et conçu pour déterminer le trajet parcouru par la roue de la machine forestière, et
- une entrée qui est une valeur de commande (ref1) proportionnelle à la vitesse de conduite souhaitée.

20. Machine forestière selon la revendication 18 ou 19, dans laquelle ladite transmission est hydrostatique et comprend deux ou plus de deux axes ou bogies oscillants à deux roues (15).

21. Machine forestière selon l'une quelconque des revendications 18 à 20, dans laquelle la machine forestière est une machine forestière permettant de transporter des troncs d'arbre.
